# EUROPÄISCHE PATENTSCHRIFT

(11) **EP 1 098 860 B1**
(45) Veröffentlichungstag und Bekanntmachung des Hinweises auf die Patenterteilung: **07.04.2004**
(21) Anmeldenummer: 99936502.6
(22) Anmeldetag: 08.07.1999
(51) Int. Cl.: C04B 24/00

(54) **VERWENDUNG VON WASSERLÖSLICHEN MISCHPOLYMEREN ALS FLIESSMITTEL UND/ODER ERSTARRUNGSVERZÖGERER FÜR ALUMINATZEMENTHALTIGE FEUERFESTMASSEN**
USE OF WATER-SOLUBLE MIXED POLYMERS AS A FLOWING MEDIUM AND/OR AS A HARDENING RETARDER FOR REFRACTORY MATERIALS WHICH CONTAIN ALUMINATE CEMENT
UTILISATION DE POLYMERES MIXTES SOLUBLES DANS L'EAU COMME SOLVANT ET/OU COMME RETARDATEUR DE DURCISSEMENT POUR DES MATIERES REFRACTAIRES CONTENANT DU CIMENT ALUMINEUX

(30) Priorität: 09.07.1998 DE 19830760
(43) Veröffentlichungstag der Anmeldung: 16.05.2001
(73) Patentinhaber: Degussa Construction Polymers GmbH, 83308 Trostberg (DE)
(72) Erfinder: WACHE, Steffen, D-83308 Trostberg (DE); PLANK, Johann, D-83308 Trostberg (DE); WUTZ, Konrad, D-83308 Trostberg (DE); BICHLER, Manfred, D-84549 Engelsberg (DE)
(74) Vertreter: Böhm, Brigitte, Dipl.-Chem. Dr.
(86) Internationale Anmeldenummer: PCT/EP1999/004813
(87) Internationale Veröffentlichungsnummer: WO 2000/002827

(56) Entgegenhaltungen:
- EP-A- 0 607 039
- EP-A- 0 632 186
- EP-A- 0 633 390
- WO-A-95/28362
- US-A- 5 472 051
- US-A- 5 911 820
- DATABASE WPI Section Ch, Week 199602 Derwent Publications Ltd., London, GB; Class A14, AN 1996-016983 XP002900859 & JP 07 291691 A (NIPPON KAYAKU KK), 7. November 1995 (1995-11-07)

## Beschreibung

Gegenstand der vorliegenden Erfindung ist die Verwendung von wasserlöslichen Mischpolymeren nach vorliegendem Anspruch 1 als Fließmittel und/oder Erstarrungsverzögerer für aluminatzementhaltige Feuerfestmassen, wie z. B. low cement castables (LCC) oder ultra low cement castables (ULCC).

Fließmittel sind in der Regel organische oder anorganische Additive, die den Wasseranspruch (-bedarf) von ungeformten Feuerfestmassen, insbesondere von sog. Castables herabsetzen. Derartige Fließmittel zeichnen sich dadurch aus, daß sie entweder bei gleichem Wassergehalt die Verarbeitbarkeit der Feuerfestmasse verbessern oder daß sich mit ihrer Hilfe bei Verminderung der Wasserzugabe und unter Beibehaltung der Konsistenz der Masse ein niedriger Wasserwert einstellen läßt.

Aluminatzementhaltieg Feuerfestmassen sind solche, in denen als hydraulisches Bindemittel ein Calciumaluminatzement (synonyme Bezeichnungen: Tonerdeschmelzzement, Tonerdezement oder Hochtonerdezement) fungiert. Die Grundlage dieser Zemente sind Al₂O₃reiche Calcium- oder Barium- (z.T. auch Strontium)-)aluminate, wobei der Al₂O₃-Gehalt ≥ 35 % ist. Bei der Klassifizierung des Zementgehaltes ist der Gehalt an CaO als hydratisierendes Element bestimmend. So spricht man von

| | |
|---|---|
| MCC (medium cement castables) | > 2,5 % CaO |
| LCC (low cement castables) | ≤ 2,5 % (mind. 1,0 %) CaO |
| ULCC (ultra low cement castables) | ≤ 1,0 % (mind. 0,2 %) CaO |

### [Gerald Routschka, Pocket manual refractory materials, Vulkan-Verlag 1997, Essen, S. 184]

Feuerfestmassen werden nach verschiedenen Kriterien eingeteilt. Z.B. nach der Partikelgröße der Rohstoffe. So besitzt ein standard refractory castable folgende Zusammensetzung:

| | Partikelgröße |
|---|---|
| 35 % | 1 - 5 mm |
| 30 % | 0,1 - 1 mm |
| 35 % | < 0,1 mm |

Auch eine Einteilung nach Rohstoffen ist üblich. Typische Rohstoffe sind dabei: Andalusit, Kyanit, Mullit, Bauxit, Feuertone (flint clays), Korrund, Magnesia, Alumina, Dolomit, Siliciumcarbid, Zirconia usw.

Weiterhin enthalten Feuerfestmassen hydraulische Bindemittel, wie z.B. Aluminatzemente, Phosphate und Alkalisilikate (Gerald Routschka, Pocket manual refractory materials, Vulkan-Verlag 1997, Essen, S. 25 - 37).

Es ist bekannt, Polyacrylate und Polyphosphate als Verflüssiger für aluminatzementhaltige Feuerfestmassen einzusetzen, wobei die Polyacrylate eine gute Fließfähigkeit sowie eine gute Wassereinsparung ergeben(N. Bunt, et al.; LAFARGE,UNITECR; Vol. 3, S. 1347, 1997, New Orleans). Durch den Einsatz der unterschiedlichen Dispergiermittel-Typen konnte der Wassergehalt in freifließenden Massen auf 5,0 - 6,0 Gew.-% (bezogen auf die Gesamteinwaage) gesenkt werden. Daraus resultieren im weiteren niedrige Porositätswerte und gesteigerte Festigkeitswerte, was wiederum zu einer besseren Haltbarkeit führt.

Aufgrund der immer weiter steigenden Anforderungen an die ungeformten feuerfesten Produkte bezüglich der Qualität der Massen und folglich auch deren Haltbarkeit, hat es nicht an Versuchen gefehlt, die Fließeigenschaften bzw. den notwendigen Wasseranteil durch Zusatz anderer organischer Verbindungen, wie z. B. Zitronensäure, zu verbessern. Es hat sich jedoch gezeigt, daß der Wasseranteil für derartige Kombinationen nur unwesentlich gesenkt werden konnte, und die Haltbarkeit in vielen Fällen immer noch nicht ausreichend ist.

Neuerdings entwickelte Pfropfpolymere auf Basis von Polyalkylenoxiden als Verflüssiger für aluminatzementhaltige Bindemittelsuspensionen (vgl. DE 198 08 314 und N. Bunt, et al.; LAFARGE,UNITECR; Vol. 3, S. 1347, 1997, New Orleans) ermöglichen die Herstellung von freifließenden Feuerfestmassen, insbesondere auf Tonerdebasis bei minimaler Anmachwassermenge. Sie besitzen jedoch den Nachteil, daß ihre Wirkung bei Zusatz von Microsilica, einem üblichen und deshalb weitverbreiteten Zuschlagstoff für Feuerfestmassen, vermindert oder teilweise sogar aufgehoben wird.

Aus dem bislang unzureichenden Stand der Technik hat sich deshalb die Aufgabe gestellt, Fließmittel und/oder Erstarrungsverzögerer für aluminatzementhaltige Feuerfestmassen zu entwickeln, welche die Wirkungsverminderung bei Zusatz von Microsilica nicht aufweisen und die bei minimaler Anmachwassermenge die Herstellung von freifließenden Feuerfestmassen erlauben, welche ohne Anwendung von Vibratoren entlüftet bzw. verdichtet werden können.

Die Aufgabe wurde entsprechend Anspruch 1 durch die Verwendung von wasserlöslichen Mischpolymeren gelöst, die hergestellt wurden aus mindestens zwei Monomeren ausgewählt aus
a) 5 - 90 Gew.-% eines Monomeren(-gemisches) der Formel I 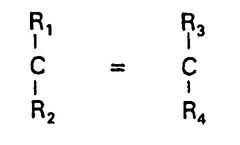 worin R₁ = H oder -CH₃, R₂ und R₃ unabhängig voneinander H oder -COOH darstellen und R₄ = H, -COOH oder -CH₂COOH, oder R₂ und R₄ zusammen 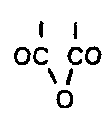 bilden oder R₃ und R₄ zusammen 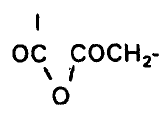 bilden,
   wobei R₃ und R₄ voneinander verschieden für H oder -COOH stehen, falls R₁ = H und R₂ = -COOH ist,
   R₃ = -COOH sowie R₄ = -CH₂COOH, falls R₁ und R₂ jeweils H ist,
   R₃ und R₄ voneinander verschieden für H oder -COOH stehen, falls R₁ = -CH₃ und R₂ = -COOH sind,
   R₂ und R₄ zusammen 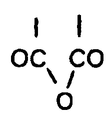 bilden, falls R₁ und R₃ jeweils H ist, oder R₁ = CH₃ und R₃ = H, und
   R₃ und R₄ zusammen 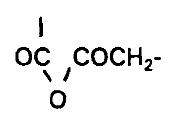 bilden, falls R₁ und R₂ jeweils H ist, bzw. eines entsprechenden Alkali-, Erdalkali- oder Ammoniumsalzes davon, und/oder
b) 5 - 90 Gew.-% eines Monomeren(-gemisches) aus der Gruppe 2-Acrylamido-2-methylpropansulfonsäure, Vinylsulfonsäure, Vinylphosphonsäure, Styrolsulfonsäure, 2-Acrylamido-2-methylpropionsäure bzw. deren Alkali-, Erdalkali- oder Ammoniumsalze oder Natriummethallylsulfonat, und
c) 5 - 90 Gew.-% eines Monomeren(-gemisches) der Reihe Acrylsäure, Methacrylsäure, N-Vinylpyrrolidon, N,N-Dimethylacrylamid, Acrylamid und Methacrylamid sowie deren entsprechende Alkali-, Erdalkali- oder Ammoniumsalze,
als Fließmittel und/oder Erstarrungsverzögerer für aluminatzementhaltige Feuerfestmassen enthaltend Microsilika mit einem Microsilikaanteil bis 20 Gew.-%.

Beim praktischen Einsatz hat sich völlig überraschend gezeigt, dass die in ihrer Zusammensetzung sehr breit zu variierenden Mischpolymere nicht nur die gewünschten verflüssigenden Eigenschaften aufweisen, sondern auch das Aushärten der Feuerfestmassen deutlich verzögern, was zusätzlich signifikant längere Verarbeitungszeiten ermöglicht und so nicht zu erwarten war.

Bei der Komponente a) handelt es sich um eine Dicarbonsäure. Zwar ist eine dispergierende Wirkung von Copolymeren bestehend aus aliphatischen, monoethylenisch ungesättigten Dicarbonsäuren und ungesättigten Monomeren bereits vorbeschrieben, diese werden aber ausschließlich als Zusätze für Bohrflüssigkeiten oder zur Verhinderung von Ablagerungen verwendet (EP-A 398 724).

Aus den von der Formel I umfassten möglichen Komponenten a) haen sich insbesondere die Maleinsäure, Maleinsäureanhydrid, Fumarsäure, Itaconsäure, Itaconsäureanhydrid und/oder die Citraconsäure als besonders geeignet erwiesen, um den Mischpolymeren die gewünschten Eigenschaften zu verleihen.

Aus der Vielzahl der ebenfalls möglichen prozentualen Zusammensetzungen sind solche bevorzugt, die zu 20 - 80 % aus der Komponente a) und/oder zu 10 - 70 % aus der Komponente b) und/oder zu 10 - 70 % aus der Komponente c) bestehen.

Am geeignetsten für die Verflüssigung aluminatzementhaltiger Feuerfestmassen haben sich Mischpolymere erwiesen, die ein mittleres Molekulargewicht von M_{w} < 50000 und vorzugsweise von 1000 bis 15000 aufweisen. In diesem Zusammenhang empfiehlt es sich, die Molmassen mittels GPC zu ermitteln. Als Standard sollte ein Polyacrylat mit einem mittleren Molekulargewicht von M_{w} = 4500 verwendet werden.

Die Herstellung der erfindungsgemäß zu verwendenden Mischpolymerisate kann in an sich bekannter Weise durch die Umsetzung der Monomeren bei Temperaturen zwischen - 10 und + 100°C, und am besten bei 20 bis 80°C, in Gegen wart geeigneter Polymerisationskatalysatorenvorgenommen werden (Polymer Handbook, Third Edition, Brandrup, Immergut, John Wiley and Sons, 1989, S. II/1 - II/59). Die Polymerisation sollte zweckmäßig in wäßriger Phase erfolgen, jedoch können ggf. auch wäßrige Lösungen von wassermischbaren Lösemitteln, wie z. B. Methanol, Ethanol oder tert. Butylalkohol als Polymerisationsmedium dienen. Als Polymerisationskatalysatoren kommen bekannte Startersysteme auf Basis organischer oder anorganischer Verbindungen in Betracht. Bevorzugt sind Perverbindungen, wie Benzoylperoxid, Acetylperoxid, tert.-Butylhydroperoxid oder Alkali- und Ammoniumperoxodisulfat, RedoxSysteme oder auch Azo-bis-iso-buttersäureamidindihydrochlorid.Falls erforderlich, kann der Zusatz von Cokatalysatoren, wie Spuren von Kupfer-, Eisen- oder Kobaltsalzen bzw. Mercaptanen, zweckmäßig sein.

Im Anschluß an die eigentliche Polymerisation können die Carbonsäurefunktionen durch Umsetzung mit Basen teilweise oder vollständig in die Salzform überführt werden. Diese Umsetzung kann mit den üblichen, basisch wirkenden Substanzen, wie z. B. Alkali- und Erdalkaliverbindungen oder Ammoniak vorgenommen werden, wobei der pH-Wert vorzugsweise auf 6,5 bis 9,5 eingestellt wird.

Die Mischpolymere fallen als viskose, vorzugsweise wäßrige Lösung an. Sie können ohne weiteres in dieser Form erfindungsgemäß verwendet werden. Ist es beabsichtigt, die Mischpolymere in fester Form zu verwenden, dann können die erhaltenen Polymer-Lösungen durch Verdampfungs- oder Trocknungsprozesse, z. B. Sprüh- oder Walzentrocknung, weiterbearbeitet werden.

Die nach bekannten Methoden so erhaltenen Mischpolymere eignen sich somit gemäß Erfindung bestens als Fließmittel für aluminatzementhaltige Feuerfestmassen, z. B. low cement castables (LCC)oder ultra low cement castables (ULCC), denen sie erfindungsgemäß in einer Menge von 0,01 bis 10 Gew.-% und besonders bevorzugt in einer Menge von 0,05 bis 1,0 Gew.-% zugesetzt werden. Als hydraulische Bindemittel kommen hierbei vor allem Tonerdesschmelzzemente und als keramische Bindemittel, wie z.B. Microsilica, in einer Menge von 0 bis 20 Gew.-% und vorzugsweise Aluminiumoxid-Verbindungen, wie z. B. Andalusit, Bauxit, Korund, Ton und Spinelle, in Frage, die in einer Menge von 1 bis 100 Gew.-% jeweils bezogen auf den Feststoffgehalt der Feuerfestmasse enthalten sind. Die Mischpolymere können für die erfindungsgemäße Verwendung in flüssiger Form oder als Pulver eingesetzt werden, wobei die flüssige Form im allgemeinen eine Lösung in Wasser ist, und die Konzentration je nach Einsatzgebiet und Anwendungsmethode variieren kann.

Zum erfindungsgemäßen Verwendungszweck können den Mischpolymeren auch noch qualitätsverbessernde Zusätze in Form von hochdisperser Kieselsäure, Kalkmehl, Kalkstein, Soda oder Pottasche beigemischt werden, deren Anteil an den Mischpolymeren dann bevorzugt 1 bis 30 Gew.-% bezogen auf das Trockengewicht der Polymeren betragen kann.

Die Erfindung sieht gemäß einer bevorzugten Ausführungsform desweiteren vor, die Mischpolymere mit den bekannten, üblichen Fließmitteln für Feuerfestmassen und/oder mit anderen Zusatzmitteln in einer Menge von 0,1 bis 95 Gew.-% bezogen auf den Feststoffgehalt der Polymere zu kombinieren und ggf. wie oben beschrieben weiter zu verarbeiten. Solch typische Dispergiermittel oder Zusatzmittel sind bspw. Naphthalinsulfonat-Formaldehyd-Kondensationsprodukte, sulfonierte Melamin-Formaldehyd-Kondensationsprodukte, Keton-Formaldehyd-Sulfit-Kondensationsprodukte, Polycarboxylate, Ligninsulfonate, Hydroxycarboxylate, Polyphosphate, aromatische Suifonatderivate, Phosphonate, Citrate oder aromatische Hydroxycarbonsäuren bzw. deren Salze.

Beispiele für andere Zusatzmittel, die den Mischpolymeren für den beanspruchten Verwendungszweck ebenfalls zugesetzt werden können, sind Luftporenbildner, Beschleuniger, Verzögerer, Entschäumer, Schaummittel und Stabilisatoren.

Die vorliegende Erfindung dient also dazu, das Fließverhalten einer Feuerfestmischung dadurch zu beeinflussen, indem man eine wirksame Menge der beschriebenen Polymere oder deren Kombinationen mit qualitätsverbessernden Zusätzen, üblichen Fließmitteln bzw. sonstigen Zusatzmitteln für Feuerfestmassen in einer gebrauchsfertigen Mischung verwendet. Die Dosierung hängt dabei natürlich von der Feuerfestmischung selbst ab und wird in der Regel so gewählt, daß diese die gewünschte Konsistenz bzw. Verarbeitbarkeit bei entsprechender Wasserreduktion erhält. Wie bereits angesprochen, kam bei der erfindungsgemäßen Verwendung der wasserlöslichen Mischpolymere völlig unerwartet hinzu, daß die Mischpolymere zusätzlich deutlich verzögernde Einflüsse im Hinblick auf das Aushärteverhalten von Feuerfestmassen entwickeln können, was die erfindungsgemäß verwendeten Polymere auch gleichzeitig als Erstarrungsverzögerer geeignet macht. Erstarrungsverzögerer sind Additive, die Einfluß auf die Dauer des hydraulischen Abbindens eines Zements im Sinne einer Verlängerung nehmen.

In jedem Fall überwindet die vorliegende Erfindung den größten bisherigen Nachteil stark wasserreduzierender Fließmittel für Feuerfestmassen, wie z. B. der bekannten Pfropfpolymere, nämlich den Wirkungsabfall beim Vorhandensein von Microsilica in den aluminatzementhaltigen Feuerfestmassen.

Insbesondere wird die Verwendung eines dreikomponentigen wasserlöslichen Polymeren beschrieben, bestehend aus 5 - 90 Gew.-% einer Komponente a), vorzugsweise vom Typ Maleinsäure, Fumarsäure oder Itaconsäure, 5 - 90 Gew.-% einer Komponente b) im wesentlichen aus der Gruppe 2-Acrylamido-2-methylpropansulfonsäure, Vinylsulfonsäure, Vinylphosphonsäure, und 5 - 90 Gew.-% der Komponente c) bestehend aus Acrylsäure, Methacrylsäure, Acrylamid und Methacrylamid, als Fließmittel für aluminatzementhaltige Feuerfestmassen. Das Mischpolymer, das ein bevorzugtes Molekulargewicht von M_{w} < 50000 aufweist, kann darüber hinaus noch mit weiteren qualitätsverbessernden Zusätzen wie Kieselsäure, Kalk oder Soda und weiteren üblichen Zusatzmitteln für Feuerfestmassen kombiniert werden.

Die nachfolgenden Beispiele sollen die Vorteile der vorliegenden Erfindung veranschaulichen.

### Beispiele

### 1) Herstellungbeispiele

### Beispiel 1

In einem 1 l Reaktionsgefäß, ausgestattet mit Rückflußkühler, Rührer, Thermometer, Tropftrichter und Stickstoffbegasung, wurden unter einer Stickstoffatmosphäre in 480 g Wasser 98 g Maleinsäureanhydrid, 103,5 g 2-Acrylarnido-2-methylpropansulfonsäure und 36 g Acrylsäure gelöst. Unter Stickstoffzufuhr wurde die Reaktionslösung im Wasserbad auf 60 °C erwärmt und 4,3 g Ammoniumperoxodisulfat sowie 8,5 g 2-Mercaptoethanol in 20 g Wasser zugetropft. Die Reaktionsmischung wurde 1,5 Stunden bei 70 °C unter Stickstoff gerührt. Danach wurde auf Raumtemperatur abgekühlt und mit Natronlauge auf pH 7 neutralisiert. Das resultierende Produkt war eine klare Polymerlösung mit einem Feststoffgehalt (FSG) von 32 Gew.-% und einem Molekulargewicht M_{w} ≈ 2 500.

### Beispiel 2

Entsprechend dem Herstellungsbeispiel 1 wurden 43,5 g Acrylsäure, 80 g Maleinsäureanhydrid, 20 g Itaconsäure und 103,5 g 2-Acrylamido-2-methylpropansulfonsäure umgesetzt. Das resultierende Produkt war eine klare Polymerlösung mit einem Feststoffgehalt (FSG) von 32 Gew.-% und einem Molekulargewicht M_{w} ≈ 2 000.

### Beispiel 3

Entsprechend dem Herstellungsbeispiel 1 wurden 103,5 g 2-Acrylamido-2-methylpropansulfonsäure, 21,6 g Acrylsäure und 56,1 g Itaconsäureanhydrid in Gegenwart von 2,5 g Ammoniumperoxodisulfat und 5,0 g 2-Mercaptoethanol umgesetzt. Das resultierende Produkt war eine klare Polymerlösung mit einem Feststoffgehalt (FSG) von 26 Gew.-% und einem Molekulargewicht M_{w} ≈ 3 000.

### 2) Verwendungsbeispiel gemäß Erfindung

Die nachfolgenden Beispiele zeigen die Verflüssigungswirkung eines handelsüblichen Polyacrylat-Verflüssigers im Vergleich mit der erfindungsgemäßen Verflüssigungswirkung der gemäß Herstellungsbeispiele 1 - 3 erhaltenen Mischpolymere:

Die Fließfähigkeit wurde an einem Feuerfestbeton folgender Zusammensetzung bestimmt:

| | | |
|---|---|---|
| Tabulator Tonerde | 3 - 6 mesh | 26 Gew.-% |
| | 6 - 10 mesh | 5 Gew.-% |
| | 8 - 14 mesh | 9 Gew.-% |
| | 14 - 28 mesh | 14 Gew.-% |
| | 28 - 48 mesh | 11 Gew.-% |
| | 48 - 200 mesh | 8 Gew.-% |
| | - 20 µm B | 6 Gew.-% |
| Reaktive Tonerde | | 2 Gew.-% |
| Tonerdeschmelzzement (70 % Al₂O₃) | | 1,5 Gew.-% |
| Microsilica | | 7 Gew.-% |
| Verflüssiger | | 0,05 Gew.-% ¹⁾ |
| Anmachwasser | | 4,2 Gew.-% |

| | | |
|---|---|---|
| ¹⁾ Die Dosierung für Verflüssiger und Anmachwasser erfolgte jeweils in Gew.-% bezogen auf die Feuerfestmischung. | | |

Die Herstellung und Ausprüfung der freifließenden Feuerfestmasse erfolgte entsprechend ENV-Standard 1402-4. Hierbei wird die Mischung in einen Konus mit 10 cm (unten) sowie 7 cm (oben) Durchmesser und 8 cm Höhe eingefüllt und der Konus nach oben abgezogen. Der Durchmesser des auseinandergeflossenen Kuchens in cm gibt in Abhängigkeit von der Zeit die Fließfähigkeit der Feuerfestmasse an.

Die bei den Messungen mit den erfindungsgemäß vorgeschlagenen Mischpolymeren erhaltenen Werte sind in Tabelle 1 aufgelistet. Zum Vergleich ist die Fließfähigkeit der Feuerfestmasse ohne Zusatz von Verflüssigern (V1) sowie mit einem handelsüblichen Verflüssiger auf Polyacrylatbasis (V2) aufgeführt:

**Tabelle 1**

| | Verflüssiger | Fließmaße in [cm] nach | | |
|---|---|---|---|---|
| | | 10 min | 30 min | 60 min |
| Vergleich V1 | - | n.m. | n.m. | n.m. |
| Vergleich V2 | Polyacrylat | n.m. | n.m. | n.m. |
| Erfindung | Beispiel 1 | 16,2 | 16,0 | 15,5 |
| | Beispiel 2 | 17,3 | 17,0 | 16,5 |
| | Beispiel 3 | 18,0 | 17,4 | 17,1 |
| n.m.: nicht meßbar [nach Abziehen des Konus fließt der Kuchen nicht auseinander, sondern bleibt aufgrund einer zu hohen Viskosität stehen.] | | | | |

## Patentansprüche

1. Verwendung von wasserlöslichen Mischpolymeren hergestellt aus mindestens zwei Monomeren ausgewählt aus
a) 5 - 90 Gew.-% eines Monomeren(-gemisches) der Formel I 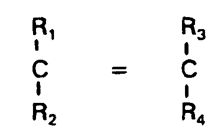 worin R₁ = H oder -CH₃, R₂ und R₃ unabhängig voneinander H oder -COOH darstellen und R₄ = H, -COOH oder -CH₂COOH, oder R₂ und R₄ zusammen 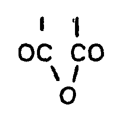 bilden oder R₃ und R₄ zusammen 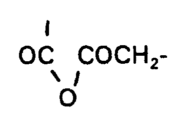 bilden,
wobei R₃ und R₄ voneinander verschieden für H oder -COOH stehen, falls R₁ = H und R₂ = -COOH ist,
R₃ = -COOH sowie R₄ = -CH₂COOH, falls R₁ und R₂ jeweils H ist,
R₃ und R₄ voneinander verschieden für H oder -COOH stehen, falls R₁ = -CH₃ und R₂ = -COOH sind,
R₂ und R₄ zusammen 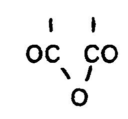 bilden, falls R₁ und R₃ jeweils H ist, oder R₁ = CH₃ und R₃ = H, und
R₃ und R₄ zusammen 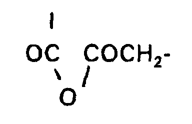 bilden, falls R₁ und R₂ jeweils H ist, bzw. eines entsprechenden Alkali-, Erdalkali- oder Ammoniumsalzes davon,
und/oder
b) 5 - 90 Gew.-% eines Monomeren(-gemisches) aus der Gruppe 2-Acrylamido-2-methylpropansulfonsäure, Vinylsulfonsäure, Vinylphosphonsäure, Styrolsulfonsäure, 2-Acrylamido-2-methylpropionsäure bzw. deren Alkali-, Erdalkali- oder Ammoniumsalze oder Natriummethallylsulfonat,
und
c) 5 - 90 Gew.-% eines Monomeren(-gemisches) der Reihe Acrylsäure, Methacrylsäure, N-Vinylpyrrolidon, N,N-Dimethylacrylamid, Acrylamid und Methacrylamid sowie deren entsprechende Alkali-, Erdalkali- oder Ammoniumsalze,
als Fließmittel und/oder Erstarrungsverzögerer für aluminatzementhaltige Feuerfestmassen enthaltend Microsilika, mit einem Microsilikaanteil bis 20 Gew.-%.

2. Verwendung nach Anspruch 1, **dadurch gekennzeichnet, daß** als Komponente a) Maleinsäure, Maleinsäureanhydrid, Fumarsäure, Itaconsäure, Itaconsäureanhydrid und/oder Citraconsäure eingesetzt wurden.

3. Verwendung nach den Ansprüchen 1 und 2, **dadurch gekennzeichnet, daß** wasserlösliche Mischpolymere bestehend aus 20 bis 80 Gew.-% der Komponente a) und/oder 10 bis 70 Gew.-% der Komponente b) und/oder 10 bis 70 Gew.-% der Komponente c) eingesetzt werden.

4. Verwendung nach den Ansprüchen 1 bis 3, **dadurch gekennzeichnet, daß** die wasserlöslichen Mischpolymere ein mittleres Molekulargewicht von M_{w} < 50 000, vorzugsweise von 1 000 bis 15 000, besitzen.

5. Verwendung nach den Ansprüchen 1 bis 4, **dadurch gekennzeichnet, daß** die wasserlöslichen Mischpolymere in einer Menge von 0,01 bis 10 Gew.-%, vorzugsweise von 0,05 bis 1,0 Gew.-%, bezogen auf den Feststoffgehalt der Feuerfestmasse eingesetzt werden.

6. Verwendung nach den Ansprüchen 1 bis 5, **dadurch gekennzeichnet, daß** die wasserlöslichen Mischpolymere noch 1 bis 30 Gew.-% bezogen auf das Trockengewicht der Mischpolymeren an qualitätsverbessernden Zusätzen enthalten.

7. Verwendung nach Anspruch 6, **dadurch gekennzeichnet, daß** als qualitätsverbessernde Zusätze hochdisperse Kieselsäure, Kalkmehl, Kalkstein, Soda oder Pottasche enthalten sind.

8. Verwendung nach den Ansprüchen 1 bis 7, **dadurch gekennzeichnet, dass** die Feuerfestmasse noch 1 bis 100 Gew.-% bezogen auf den Feststoffgehalt der Feuerfestmasse eines keramischen Bindemittels in Form von Aluminiumoxid-Verbindungen, wie z.B. Andalusit, Bauxit, Korund, Spinelle und Tone, enthält.

9. Verwendung nach den Ansprüchen 1 bis 8, **dadurch gekennzeichnet, daß** die wasserlöslichen Mischpolymere noch weitere übliche Fließmittel und/oder Zusatzmittel für Feuerfestmassen in einer Menge von 0,1 bis 95 Gew.-% bezogen auf den Feststoffgehalt der Polymere enthalten.

10. Verwendung nach Anspruch 9, **dadurch gekennzeichnet, daß** die Zusatzmittel Luftporenbildner, Beschleuniger, Verzögerer, Entschäumer, Schaummittel oder Stabilisatoren darstellen.

## Claims

1. Use of water-soluble copolymers prepared from at least two monomers selected from among
a) 5-90% by weight of a monomer (mixture) of the formula I 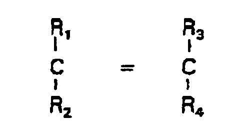 where R₁ = H or -CH₃, R₂ and R₃ are each, independently of one another, H or -COOH and R₄ = H, -COOH or -CH₂COOH,
or R₂ and R₄ together form a 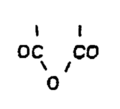 group or R₃ and R₄ together form a 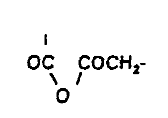 group,
where R₃ and R₄ are different and are each H or -COOH when R₁ = H and R₂ = -COOH,
R₃ = -COOH and R₄ = -CH₂COOH when R₁ and R₂ are each H,
R₃ and R₄ are different and are each H or -COOH when R₁ = -CH₃ and R₂ = -COOH,
R₂ and R₄ together form a 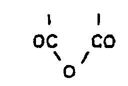 group when R₁ and R₃ are each H or R₁ = CH₃ and R₃ =H, and
R₃ and R₄ together form a 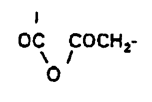 group
when R₁ and R₂ are each H,
or a corresponding alkali metal, alkaline earth metal or ammonium salt thereof,
and/or
b) 5-90% by weight of a monomer (mixture) selected from the group consisting of 2-acrylamido-2-methylpropanesulphonic acid, vinylsulphonic acid, vinylphosphonic acid, stryrenesulphonic acid, 2-acrylamido-2-methylpropionic acid and their alkali metal, alkaline earth metal and ammonium salts and sodium methallylsulphonate, and
c) 5-90% by weight of a monomer (mixture) selected from the group consisting of acrylic acid, methacrylic acid, N-vinylpyrrolidone, N,N-dimethylacrylamide, acrylamide and methacrylamide and their corresponding alkali metal, alkaline earth metal and ammonium salts,
as fluidizers and/or setting retarders for refractory compositions comprising alumina cement and microsilica and having a microsilica content of up to 20%.

2. Use according to Claim 1, **characterized in that** maleic acid, maleic anhydride, fumaric acid, itaconic acid, itaconic anhydride and/or citraconic acid are/is used as component a).

3. Use according to Claim 1 or 2, **characterized in that** water-soluble copolymers comprising from 20 to 80% by weight of component a) and/or from 10 to 70% by weight of component b) and/or from 10 to 70% by weight of component c) are used.

4. Use according to Claims 1 to 3, **characterized in that** the water-soluble copolymers have a mean molecular weight M_{w} of < 50 000, preferably from 1 000 to 15 000.

5. Use according to Claims 1 to 4, **characterized in that** the water-soluble copolymers are used in an amount of from 0.01 to 10% by weight, preferably from 0.05 to 1.0% by weight, based on the solids content of the refractory composition.

6. Use according to Claims 1 to 5, **characterized in that** the water-soluble copolymers further comprise from 1 to 30% by weight, based on the dry weight of the copolymers, of quality-improving additives.

7. Use according to Claim 6, **characterized in that** finely divided silica, powdered lime, limestone, soda or potash are present as quality-improving additives.

8. Use according to Claims 1 to 7, **characterized in that** the refractory composition further comprises from 1 to 100% by weight, based on the solids content of the refractory composition, of a ceramic binder in the form of aluminium oxide compounds, e.g. andalusite, bauxite, corrundum, spinels and clays.

9. Use according to Claims 1 to 8, **characterized in that** the water-soluble copolymers further comprise other customary fluidizers and/or additives for refractory compositions in an amount of from 0.1 to 95% by weight, based on the solids content of the polymers.

10. Use according to Claim 9, **characterized in that** the additives are air pore formers, accelerators, retarders, antifoams, foaming agents or stabilizers.

## Revendications

1. Utilisation de copolymères solubles dans l'eau, préparés à partir d'au moins deux monomères choisis parmi :
a) 5-90% en poids d'un (mélange de) monomère(s) de formule I : 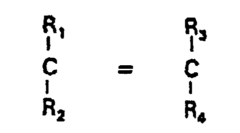 où R₁ = H ou -CH₃, R₂ et R₃ représentent indépendamment l'un de l'autre H ou -COOH et R₄ = H, -COOH ou -CH₂COOH,
ou R₂ et R₄ forment ensemble 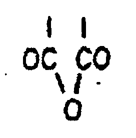 ou R₃ et R₄ forment ensemble 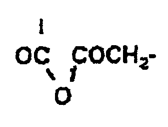 où R₃ et R₄ sont différents l'un de l'autre et représentent H ou -COOH, si R₁ = H et R₂ = -COOH,
R₃ = -COOH et R₄ = -CH₂COOH, si R₁ et R₂ sont chacun H,
R₃ et R₄ sont différents l'un de l'autre et représentent H ou -COOH, si R₁ = -CH₃ et R₂ = -COOH,
R₂ et R₄ forment ensemble 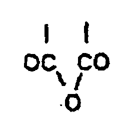 si R₁ et R₃ sont chacun H, ou R₁ = CH₃ et R₃ =H, et
R₃ et R₄ forment ensemble 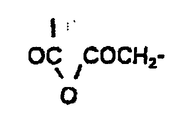 si R₁ et R₂ sont chacun H,
et respectivement, un sel alcalin, alcalino-terreux ou d'ammonium correspondant de ceux-ci,
et/ou
b) 5-90% en poids d'un (mélange de) monomère(s) du groupe acide 2-acrylamido-2-méthylpropanesulfonique, acide vinylsulfonique, acide vinylphosphonique, acide styrènesulfonique, acide 2-acrylamido-2-méthylpropionique et leurs sels alcalins, alcalino-terreux ou d'ammonium ou le méthallylsulfonate de sodium, et
c) 5-90% en poids d'un (mélange de) monomère(s) de la série de l'acide acrylique, l'acide méthacrylique, la N-vinylpyrrolidone, le N,N-diméthylacrylamide, l'acrylamide et le méthacrylamide, ainsi que les sels alcalins, alcalino-terreux ou d'ammonium correspondants, comme fluidifiant et/ou retardateur de durcissement pour des composés résistant au feu contenant du ciment alumineux, contenant de la microsilice, avec une proportion de microsilice jusqu'à 20% en poids.

2. Utilisation selon la revendication 1, **caractérisée en ce que** l'on met en oeuvre comme composant a), l'acide maléique, l'anhydride maléique, l'acide fumarique, l'acide itaconique, l'anhydride itaconique et/ou l'acide citraconique.

3. Utilisation selon la revendication 1 et 2, **caractérisée en ce que** l'on met en oeuvre des copolymères solubles dans l'eau consistant en 20 à 80% en poids du composant a) et/ou 10 à 70% en poids du composant b) et/ou 10 à 70% en poids du composant c).

4. Utilisation selon les revendications 1 à 3, **caractérisée en ce que** les copolymères solubles dans l'eau possèdent un poids moléculaire moyen Mw < 50 000 de préférence de 1000 à 15 000.

5. Utilisation selon les revendications 1 à 4, **caractérisée en ce que** les copolymères solubles dans l'eau sont mis en oeuvre en une quantité de 0,01 à 10% en poids, de préférence de 0,05 à 1,0% en poids, sur la base de la teneur en matières solides du composé résistant au feu.

6. Utilisation selon les revendications 1 à 5, **caractérisée en ce que** les copolymères solubles dans l'eau contiennent en outre 1 à 30% en poids sur la base du poids sec des copolymères d'additifs améliorant la qualité.

7. Utilisation selon la revendication 6, **caractérisée en ce que** comme additifs améliorant la qualité, sont contenus l'acide silicique fortement dispersé, la chaux en poudre, le calcaire, la soude ou la potasse.

8. Utilisation selon les revendications 1 à 7, **caractérisée en ce que** le composé résistant au feu contient en outre 1 à 100% en poids, sur la base de la teneur en matières solides du composé résistant au feu, d'un liant céramique sous forme de composés oxyde d'aluminium, comme par exemple, l'andalusite, la bauxite, le corindon, la spinelle et l'alumine.

9. Utilisation selon les revendications 1 à 8, **caractérisée en ce que** les copolymères solubles dans l'eau contiennent en outre d'autres fluidifiants et/ou additifs usuels pour les composés résistant au feu en une quantité de 0,1 à 95% en poids sur la base de la teneur en matières solides des polymères.

10. Utilisation selon la revendication 9, **caractérisée en ce que** les additifs sont un agent porogène, un accélérateur, un retardateur, un antimousse, un agent moussant ou un stabilisant.
